# EUROPEAN PATENT APPLICATION

(11) **EP 4 806 314 A1**
(43) Date of publication of application: **16.09.2026**
(21) Application number: 26159232.3
(22) Date of filing: 18.02.2026
(51) Int. Cl.: A47J 43/07

(54) **CORDLESS MULTI-FUNCTIONAL FOOD CUTTING APPLIANCE**

(30) Priority: 28.02.2025 US 202563765246 P; 11.02.2026 US 202619537109
(71) Applicant: Whirlpool Corporation, Benton Harbor, MI 49022 (US)
(72) Inventor: ADITJANDRA, Antonius K., Benton Harbor, MI, 49022 (US); ARMSTRONG, Shawn A., Benton Harbor, MI, 49022 (US); D'ALESSANDRO QUANTE, Kathryn, Benton Harbor, MI, 49022 (US); SALCEDO ORTEGA, Francisco J., Benton Harbor, MI, 49022 (US); SCHUTTE, Nicholas H., Benton Harbor, MI, 49022 (US); WILSON, Rex, Benton Harbor, MI, 49022 (US); LANGFELDT, Carla E., Benton Harbor, MI, 49022 (US)
(74) Representative: Witte, Weller & Partner Patentanwälte mbB

(57) **Abstract**

A cordless kitchen appliance (20) has a motor housing (22), a drive assembly (24) disposed within the motor housing (22), a battery (91) selectively attached to the motor housing (22) to power the drive assembly (24), and an operable assembly (26) selectively coupled to the motor housing (22) and selectively engaged with the drive assembly (24) to allow the drive assembly (24) to rotate a cylindrical blade (38) of the operable assembly (26). A user may insert food items into the operable assembly (26), pressing the food items against the cylindrical blade (38) with a pusher (40) to process the food items. The cordless kitchen appliance (20) provides a variety of safety features including multiple interlock mechanisms (158), (182) and a microcontroller configured to control the operation of the drive assembly (24). Further, the cordless kitchen appliance (20) provides a variety of convenience features, including release mechanisms and structures configured to facilitate the storage of the cordless kitchen appliance (20) when the cordless kitchen appliance (20) is not in use.

## Description

### BACKGROUND OF THE DISCLOSURE

The present disclosure generally relates to a cordless kitchen appliance, and more particularly, to a cordless slicing appliance.

Kitchen appliances operable to slice, grate, and/or shred food items are commonly used within professional and non-professional kitchen environments to slice, grate, and/or shred various food items during the preparation of various food dishes. Such appliances typically rely on corded power connections, which can limit portability and ease of use in various kitchen environments. Additionally, such appliances may present challenges related to weight distribution and the stability of the appliance during operation. Furthermore, such appliances may potentially present safety risks to the user if the appliance is inadvertently activated or if various attachable components of the appliance are left unattached during an operation of the appliance.

### SUMMARY OF THE DISCLOSURE

According to one aspect of the present disclosure, a cordless kitchen appliance includes a motor housing defining a housing interior, a drive assembly disposed within the motor housing, a battery selectively coupled with the motor housing to power the drive assembly, and an operable assembly selectively coupled with the motor housing. The operable assembly includes a lateral cover that defines a lateral interior, a longitudinal cover that defines a longitudinal interior, wherein the longitudinal cover is coupled with the lateral cover such that the lateral interior of the lateral cover and the longitudinal interior of the longitudinal cover are in fluid communication, and a cylindrical blade selectively disposed within the lateral interior of the lateral cover, wherein the operable assembly is selectively coupled with the motor housing via the lateral cover and selectively engaged with the drive assembly via the cylindrical blade. The cordless kitchen appliance further includes a blade interlock mechanism coupled with the motor housing and transitionable into an activation state by the cylindrical blade being disposed within the lateral interior, and a cover interlock mechanism coupled with the motor housing and transitionable into an activation state by the operable assembly, wherein when both the blade interlock mechanism and the cover interlock mechanism are in the activation state, the drive assembly is able to rotate the cylindrical blade.

According to another aspect of the present disclosure, a cordless food slicer operable to slice a food item includes a motor housing that defines a housing interior, a drive assembly disposed within the motor housing, a battery selectively coupled with an exterior surface of the motor housing to power the drive assembly, and an operable assembly selectively coupled with the motor housing. The operable assembly includes a lateral cover that defines a lateral interior, a longitudinal cover that defines a longitudinal interior, wherein the longitudinal cover is coupled with the lateral cover such that the lateral interior of the lateral cover and the longitudinal interior of the longitudinal cover are in fluid communication, and a cylindrical blade selectively disposed within the lateral interior of the lateral cover, wherein the operable assembly is selectively coupled with the motor housing via the lateral cover and selectively engaged with the drive assembly via the cylindrical blade, thereby enabling the drive assembly to rotate the cylindrical blade to slice a food item.

According to another aspect of the present disclosure, a cordless kitchen appliance includes a motor housing defining a housing interior, a drive assembly disposed within the motor housing, a battery selectively coupled with the motor housing to power the drive assembly, and an operable assembly selectively coupled with the motor housing. The operable assembly includes a cover assembly and a cylindrical blade selectively disposed within a hollow interior of the cover assembly, wherein the operable assembly is selectively coupled with the motor housing via the cover assembly and selectively engaged with the drive assembly via the cylindrical blade to enable the drive assembly to rotate the cylindrical blade.

Use of the cordless kitchen appliance of the present disclosure may provide for a variety of advantages, including, but not limited to the following. The portable nature of the cordless kitchen appliance allows the user to move the cordless kitchen appliance about a user's kitchen, and even to locations such as a dining room to provide freshly sliced, grated, and/or shredded food items. Further, the dimensions and weight distribution that function to position a center of gravity of the cordless kitchen appliance in the bottom-rear portion of the cordless kitchen appliance function to maintain the cordless kitchen appliance in an upright position. As such, the cordless kitchen appliance may remain substantially stable, even upon application of a downward force that may be exerted against the cordless kitchen appliance when the user presses a food item against a cylindrical blade of the cordless kitchen appliance. Additionally, this stability allows for the height and length of an operable assembly, that includes the cylindrical blade, to accommodate a wide variety of vessels. Additionally, the safety features of the cordless kitchen appliance function to further safeguard the user. Specifically, interlock mechanisms may inhibit the activation of the cordless kitchen appliance unless the operable assembly has been properly aligned with and fitted to a motor housing of the cordless kitchen appliance. Additionally, a safety routine that may be provided by a microcontroller of the cordless kitchen appliance functions to further reduce accidental activations of a motor of the cordless kitchen appliance. Also, release mechanisms provided by the cordless kitchen appliance provide flexibility to the user, allowing the user to simply remove the entire operable assembly from the motor housing or remove only the cylindrical blade. Additionally, various convenience features provided by the cordless kitchen appliance can facilitate ease of use, allowing for convenient storage of the pusher within a longitudinal cover of the operable assembly and reducing the effort required to wash the pusher.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of a front side of a cordless kitchen appliance;
FIG. 2 is a top perspective view of a rear side of the cordless kitchen appliance showing a removable battery of the cordless kitchen appliance detached from the cordless kitchen appliance;
FIG. 3 is a top perspective partially exploded view of the cordless kitchen appliance;
FIG. 4 is a side elevational cross-sectional view of the cordless kitchen appliance taken at lines IV in FIG. 1;
FIG. 5 is a front elevational view of an attachment portion of the cordless kitchen appliance;
FIG. 6 is a top perspective partially exploded view of the attachment portion of the cordless kitchen appliance;
FIG. 7 is a top perspective view of a front side of an operable assembly of the cordless kitchen appliance when the operable assembly is disassembled;
FIG. 8 is a top perspective view of a rear side of the operable assembly of the cordless kitchen appliance, when the operable assembly is disassembled;
FIG. 9 is a bottom perspective view of a first side of a pusher of the operable assembly;
FIG. 10 is a top perspective view of the front side of the operable assembly when the operable assembly is assembled; and
FIG. 11 is a top perspective view of the rear side of the operable assembly when the operable assembly is assembled.

The components in the figures are not necessarily to scale, emphasis instead being placed upon illustrating the principles described herein.

### DETAILED DESCRIPTION

The present illustrated embodiments reside primarily in combinations of method steps and apparatus components related to a household appliance, specifically, a cordless kitchen appliance. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

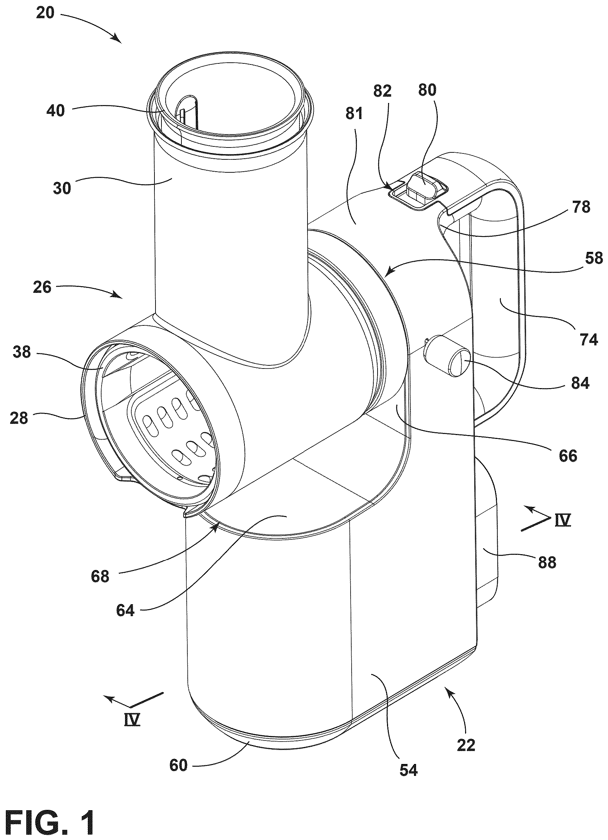

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

Referring to FIGS. 1-11, reference numeral 20 generally designates an appliance 20, specifically, a cordless kitchen appliance 20. The cordless kitchen appliance 20 has a motor housing 22 that defines a housing interior 23, a drive assembly 24 disposed within the motor housing 22, a battery 91 selectively coupled with the motor housing 22 to power the drive assembly 24, and an operable assembly 26 selectively coupled with the motor housing 22. The operable assembly 26 has a lateral cover 28 that defines a lateral interior 32, a longitudinal cover 30 that defines a longitudinal interior 34, wherein the longitudinal cover 30 is coupled with the lateral cover 28 such that the lateral interior 32 of the lateral cover 28 and the longitudinal interior 34 of the longitudinal cover 30 are in fluid communication, and a cylindrical blade 38 selectively disposed within the lateral interior 32 of the lateral cover 28, wherein the operable assembly 26 is selectively coupled with the motor housing 22 via the lateral cover 28 and selectively engaged with the drive assembly 24 via the cylindrical blade 38. The cordless kitchen appliance 20 also has a blade interlock mechanism 158 coupled with the motor housing 22 and configured to be transitioned to an activation state by the cylindrical blade 38 and a cover interlock mechanism 182 coupled with the motor housing 22 and configured to be transitioned to an activation state by the operable assembly 26, and wherein when both the blade interlock mechanism 158 and the cover interlock mechanism 182 are in the activation state, the drive assembly 24 is able to rotate the cylindrical blade 38.

With continued reference to FIGS. 1-11, the longitudinal cover 30 extends substantially perpendicularly from the lateral cover 28. The operable assembly 26 additionally includes a pusher 40 selectively disposed within the longitudinal interior 34. The operable assembly 26 is selectively coupled with the motor housing 22 via the lateral cover 28 and to the drive assembly 24 via the cylindrical blade 38. Specifically, a first attachment feature 42 and a second attachment feature 43 provided by the lateral cover 28 interact with a first locking feature 44 and a second locking feature 45 provided by an attachment portion 58 of the motor housing 22 to selectively couple the operable assembly 26 to the motor housing 22. Additionally, a drive shaft 100 of the drive assembly 24 is received within a hollow interior of a blade shaft 52 of the cylindrical blade 38 to selectively couple the operable assembly 26 to the drive assembly 24. In operation, a user may attach the operable assembly 26 to the motor housing 22, interfacing the first and second attachment features 42, 43 with the first and second locking features 44, 45 and disposing the blade shaft 52 over the drive shaft 100. The user may then activate the drive assembly 24, causing the cylindrical blade 38 to rotate. The user may introduce food items to be processed into the operable assembly 26 via the longitudinal cover 30, pressing the food item against the rotating cylindrical blade 38 through the use of the pusher 40. Food items may be sliced, shredded, grated, and/or otherwise processed by the user through engaging the food item against the cylindrical blade 38 as the cylindrical blade 38 rotates.

Referring now to FIGS. 1-3, the cordless kitchen appliance 20 is formed of the motor housing 22, the drive assembly 24, an electronics assembly 25, and the operable assembly 26. The motor housing 22 is formed of a housing body 54, an arcuate wall 56, the attachment portion 58, and a base member 60 that together, cooperate to define the housing interior 23 of the motor housing 22. The housing body 54 is attached to the base member 60 at a bottom portion 61 of the housing body 54, such that the base member 60 may support the cordless kitchen appliance 20 against a surface. The arcuate wall 56 is attached to the housing body 54 to cover an arcuate opening 62 formed by the housing body 54. As such, the motor housing 22 can have a lateral surface 64 and a longitudinal surface 66 provided by the arcuate wall 56, wherein the longitudinal surface 66 longitudinally extends upwards from the lateral surface 64. Further, the arcuate wall 56 provides the motor housing 22 with an operative space 68 through which the operable assembly 26 may extend. The attachment portion 58 is attached to the longitudinal surface 66 and laterally extends substantially perpendicular to the longitudinal surface 66 and into the operative space 68. Specifically, the attachment portion 58 forms a generally annular shape and is attached to an attachment ring 72 that circumscribes a wall opening 57 of the arcuate wall 56 and is formed by and laterally extends from the longitudinal surface 66 into the operative space 68. Further, the attachment portion 58 can be coaxially coupled with the attachment ring 72, such that a centerline of both the attachment portion 58 and the attachment ring 72 are substantially aligned. Accordingly, the attachment portion 58 can cover the wall opening 57.

As shown in the configuration illustrated in FIGS. 1-3, the housing body 54, the arcuate wall 56, the attachment portion 58, and the base member 60 may be individual components, attached to one another via a snap-fit system, bolts, adhesives, and/or other suitable fasteners. Alternatively, the components 54, 56, 58, 60 of the motor housing 22 may be integrally formed, such that the motor housing 22 is a single unitary body. Additionally, some components of the motor housing 22 may be integrally formed with other components of the motor housing 22, such that the motor housing 22 is formed of a mix of integrally formed components. Additionally, in the configuration of the cordless kitchen appliance 20 shown in FIGS. 1-3, the arcuate wall 56 has a substantially arcuate form, however, the arcuate wall 56 may be formed such that the arcuate wall 56 is substantially rectilinear

With continued reference to FIGS. 1-3, a handle 74 is attached to a rear side 76 of the housing body 54 opposite the longitudinal surface 66. The handle 74 may longitudinally extend towards the base member 60 and terminate in a free-floating end. Alternatively, as shown in the configuration illustrated in FIGS. 1-3, the handle 74 may extend from a top lip 78 positioned at and laterally extending from the top of the rear side 76. The handle 74 may extend between and be attached at both the top of the rear side 76, via the top lip 78 and at a mid-section of the rear side 76. The handle 74 is configured to be grasped by the user, facilitating the portable operation of the cordless kitchen appliance 20.

Still referring to FIGS. 1-3, an operation control 80 may be provided at a top portion 81 of the housing body 54. Specifically, as shown in the configuration illustrated in FIGS. 1-3, the operation control 80 may be a switch operably positioned within a switch recess 82 formed at the top portion 81 of the housing body 54. Specifically, the operation control 80 and switch recess 82 may be positioned at the top lip 78. The operation control 80 extends into the housing interior 23 to interface with the electronics assembly 25 and the drive assembly 24 that are both disposed within the housing interior 23. The user may interact with the operation control 80 to place the operation control 80 in an on-position to activate the drive assembly 24, and an off-position to deactivate the drive assembly 24.

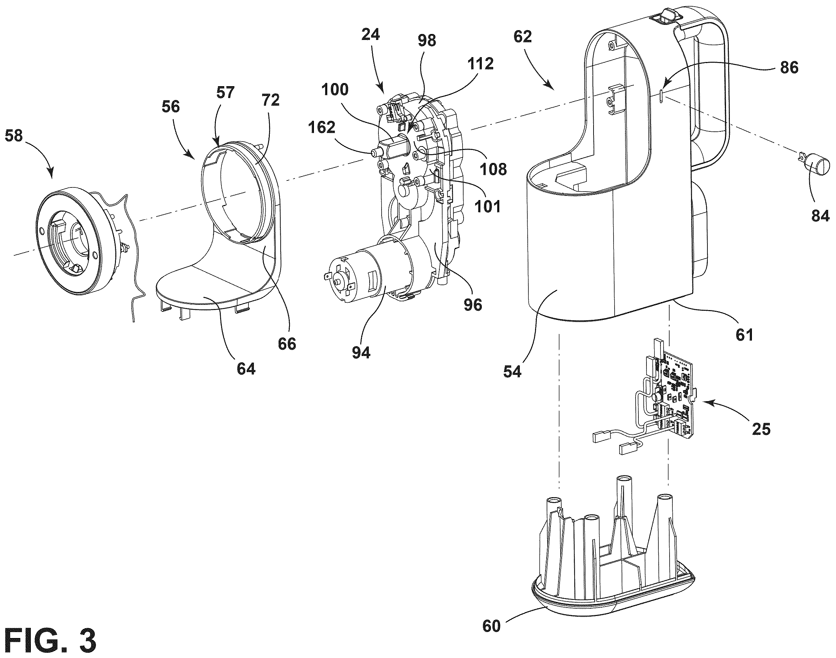

Now referring to FIG. 1, an actuation member 84 is operably disposed within an actuation slot 86 formed in the housing body 54. As shown in the configuration illustrated in FIG. 3, the actuation slot 86 is adjacent to the attachment portion 58. Consequently, the actuation member 84 is configured to facilitate the selective attachment of the operable assembly 26, specifically, the cylindrical blade 38, to the attachment portion 58. As such, the actuation member 84 extends through the actuation slot 86 and into the housing interior 23.

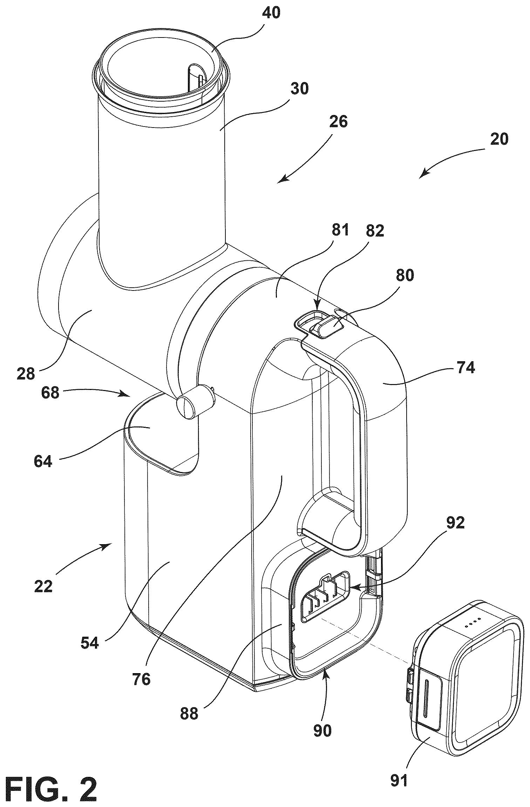

Referring now to FIG. 2, the cordless kitchen appliance 20 is contemplated to be a cordless kitchen appliance 20 that is powered using a rechargeable power source in the form of the battery 91. To facilitate this feature, the motor housing 22 includes a battery collar 88 formed with or otherwise attached and outwardly extending from the rear side 76 of the housing body 54. More specifically, the battery collar 88 extends from an exterior surface 85 of the motor housing 22, such that the battery 91 may be selectively interfaced with, or otherwise, coupled with the exterior surface 85 of the motor housing 22. In the configuration shown in FIG. 2, the battery collar 88 is positioned at the rear side 76 of the housing body 54, opposite the longitudinal surface 66 and the operable assembly 26. The battery collar 88 defines a battery-receiving cavity 90 within which the battery 91 is selectively attached to power the drive assembly 24 and the electronics assembly 25. Further, a reception aperture 92 is formed within the battery-receiving cavity 90 that defines a passage to the housing interior 23 through which the battery 91 may interface, engage, or otherwise, interact with the drive assembly 24 and the electronics assembly 25.

As can be appreciated, the use of the removable battery 91 to power the drive assembly 24 is such that the cordless kitchen appliance 20 described herein is operable without having to plug the cordless kitchen appliance 20 into an external power source (such as a wall outlet or the like) and results in the disclosed cordless kitchen appliance 20 being characterized as "cordless." In this manner, the cordless kitchen appliance 20 may be placed and operated in any convenient location along the counter space provided within the kitchen, regardless of the proximity of such location to an available power outlet.

Referring now to FIGS. 3-4, the drive assembly 24 includes a motor 94, a support bracket 96, a gear assembly 98, and a drive shaft 100. The motor 94 extends laterally through a portion of the housing interior 23 formed by the bottom portion 61 of the housing body 54. Further, the motor 94 may extend substantially parallel to the base member 60. The gear assembly 98 is operatively coupled with the motor 94 and is formed of a plurality of interlinked gears. The gear assembly 98 longitudinally extends from the motor 94 towards the top portion 81 of the housing body 54. Further, the attachment of the motor 94 to the gear assembly 98 may be facilitated by the support bracket 96 that longitudinally extends between and further interconnects the motor 94 and the gear assembly 98. The gear assembly 98 is configured to transfer a force generated by the motor 94 to a terminal gear 102, wherein the terminal gear 102 is the distal-most gear of the plurality of gears relative to the motor 94. The terminal gear 102 is positioned adjacent to the attachment portion 58 and forms a substantially annular shape such that the terminal gear 102 may be coaxial with the attachment portion 58. From the terminal gear 102, the drive shaft 100 laterally extends out of a terminal gear housing 101 that houses the terminal gear 102. Specifically, the drive shaft 100 extends through a plate 108 attached to or otherwise formed by the gear assembly 98. Specifically, the plate 108 is attached to or otherwise, at least partially formed by the terminal gear housing 101, such that the plate 108 overlays and thereby substantially covers the terminal gear 102. The drive shaft 100 can extend through a plate aperture 112 formed by the plate 108. From the plate 108, the drive shaft 100 further extends through the wall opening 57 of the arcuate wall 56, and through the attachment portion 58, such that the drive shaft 100 may be operatively coupled with the operable assembly 26. The drive shaft 100 is driven to rotate via the rotation of the terminal gear 102 about a drive shaft axis 104. The drive shaft axis 104 may be aligned, specifically, collinear, with the centerline of the terminal gear 102, the attachment ring 72, and the attachment portion 58.

As can be appreciated, the positioning of the motor 94 and the gear assembly 98 within the bottom portion 61 and towards the rear side 76 of the housing body 54 provides the cordless kitchen appliance 20 with a center of gravity positioned towards the bottom portion 61 and the rear side 76 of the housing body 54. Additionally, the operative space 68 provided via the arcuate wall 56 of the motor housing 22 further contributes to the positioning of the center of gravity of the operable assembly 26 towards the bottom portion 61 and the rear side 76 of the housing body 54. Specifically, the center of gravity may exist at a portion of the cordless kitchen appliance 20 positioned opposite the operative space 68 and thus opposite the operable assembly 26 when the operable assembly 26 is attached to the housing body 54. Consequently, the cordless kitchen appliance 20 is urged to maintain an upright, operable position even when a user applies a downwards force to the operable assembly 26 that would otherwise tend to tip the cordless kitchen appliance 20. Additionally, the positioning of the removable battery 91 further facilitates the positioning of the center of gravity towards the bottom-rear portion of the cordless kitchen appliance 20.

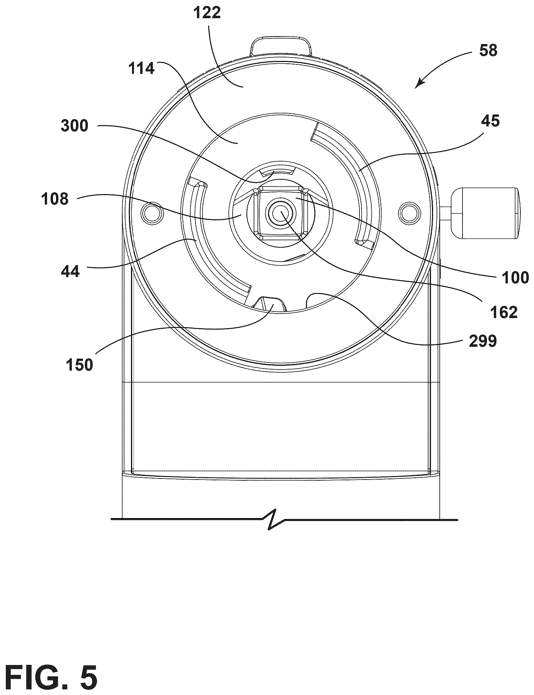

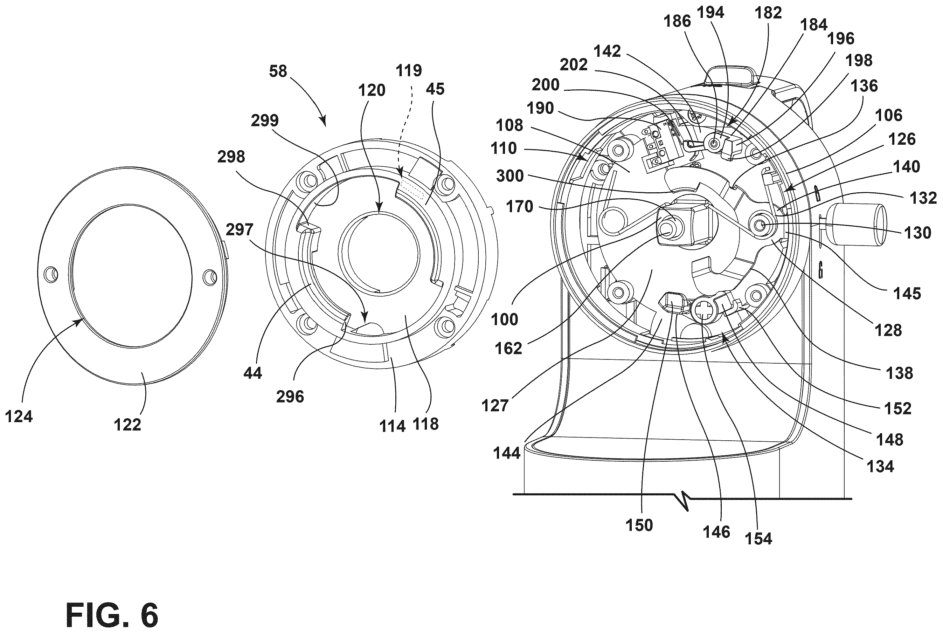

With reference now to FIGS. 5 and 6, the attachment portion 58 has an attachment collar 106 that circumscribes the attachment ring 72. The attachment ring 72 laterally extends away from the plate 108 and into the operative space 68. The attachment portion 58 also has an inner cover 114 that can be positioned within and circumscribed by the attachment ring 72, such that the inner cover 114 overlays at least a portion of the plate 108. The inner cover 114 can be laterally spaced apart from the plate 108, such that an attachment cavity 110 is defined therebetween. The attachment cavity 110 may be substantially sealed, or otherwise covered, via the engagement of the inner cover 114 and the attachment ring 72. The inner cover 114 further provides a cover surface 118 that forms a cover aperture 120 centered about a centerline of the inner cover 114. Additionally, the attachment portion 58 has a cladding 122 that circumscribes the perimeter of the inner cover 114, thereby overlaying a portion of the inner cover 114, but leaving exposed a substantial majority of the cover surface 118. The cladding 122 can be attached to both the attachment ring 72 and the attachment collar 106 to further integrate the attachment portion 58 with the housing body 54. Further, the cladding 122 forms a cladding aperture 124 that is centered about a centerline of the cladding 122. The attachment collar 106, the inner cover 114, and the cladding 122 each have a substantially annular shape and may be coaxially aligned about a centerline of the attachment collar 106, the inner cover 114, and the cladding 122. As such, the cover aperture 120 of the inner cover 114 and the cladding aperture 124 of the cladding 122 can each be aligned with the other to define a passage between the attachment cavity 110 and the operative space 68. Consequently, the drive shaft 100 can be disposed through the cover aperture 120 of the inner cover 114, and the cladding aperture 124 of the cladding 122 to enter into the operative space 68.

With continued reference to FIGS. 5 and 6, a latch mechanism 126 is positioned within the attachment cavity 110 and operably coupled with a surface 127 of the plate 108. The latch mechanism 126 facilitates the selective attachment and removal of the cylindrical blade 38 to and from the attachment portion 58 and the drive shaft 100. The user may interact with the latch mechanism 126 via the actuation member 84. The latch mechanism 126 includes a dual-catch member 128, a dual-catch pivot rod 130, a biasing element 132, and a lift member 134. The dual-catch member 128 is formed of a first arm 136 and a second arm 138 that both laterally extend substantially parallel to the surface 127 of the plate 108 from a pivot base 140 of the dual-catch member 128. As shown in the configuration illustrated in FIG. 6, the first arm 136 and the second arm 138 extend at an oblique angle relative to the pivot base 140. Further, the first arm 136 extends upwards towards an upper portion 142 of the plate 108, such that a distal-most end of the first arm 136 relative to the pivot base 140 is disposed between the drive shaft 100 and the upper portion 142 of the plate 108. The second arm 138 extends downwards towards a lower portion 144 of the plate 108, such that a distal-most end of the second arm 138 relative to the pivot base 140 is disposed between the drive shaft 100 and the lower portion 144 of the plate 108. The dual-catch pivot rod 130 extends laterally from the surface 127 of the plate 108, such that the dual-catch member 128 may be pivotably coupled with the dual-catch pivot rod 130 via the pivot base 140. Accordingly, the dual-catch member 128 may pivot about the dual-catch pivot rod 130 between a latched position, wherein the first arm 136 is positioned adjacent to the drive shaft 100 and the second arm 138 is positioned adjacent to the lower portion 144, and an unlatched position, wherein the first arm 136 is positioned adjacent to the upper portion 142 and the second arm 138 is positioned adjacent to the drive shaft 100. Accordingly, the first arm 136 may be raised and lowered relative to the drive shaft 100 and the second arm 138 may be raised and lowered relative to the drive shaft 100 as the dual-catch member 128 transitions between the latched position and the unlatched position.

With continued reference to FIGS. 5 and 6, the actuation member 84 is fixed to the latch mechanism 126 via an inner flange 145 that extends from the pivot base 140 into the housing interior 23. The dual-catch member 128 may accordingly be pivoted via the actuation member 84 to transition the dual-catch member 128 between the latched position and the unlatched position.

The biasing element 132 is operably coupled with the dual-catch member 128 via the pivot base 140. The biasing element 132 exerts a force tending to bias the dual-catch member 128 towards the latched position. Consequently, the user must exert a force, for example, via the actuation member 84, to overcome the bias and transition the dual-catch member 128 to the unlatched position.

Still referring to FIGS. 5 and 6, the lift member 134 is positioned at the lower portion 144 of the plate 108. The lift member 134 is formed of a striking end 146 and an actuation end 148 opposite the striking end 146. The striking end 146 is positioned at the lower portion 144 and the actuation end 148 is positioned adjacent to the second arm 138. Specifically, the second arm 138 is adjacent to and interfaced with the actuation end 148. Further, in the latched position, the second arm 138 is pressed against the actuation end 148, pressing the actuation end 148 against a stop flange 152 that extends from the surface 127 of the plate 108. The lift member 134 is pivotably coupled with a lift pivot shaft 154 at a portion of the lift member 134 disposed between the striking end 146 and the actuation end 148. The lift pivot shaft 154 laterally extends from the surface 127 of the plate 108 to facilitate the pivoting of the lift member 134 between an un-lifted position and a lifted position. In the un-lifted position, the actuation end 148 is pressed against the stop flange 152 via the second arm 138. The lift member 134 pivots from the un-lifted position to the lifted position when a trigger 150 of the striking end 146 is struck with a substantially downward force. Consequently, the lift member 134 will begin to pivot as the substantially downward force overcomes the bias of the biasing element 132. Specifically, the striking end 146 pivots substantially downwards away from the drive shaft 100, and the actuation end 148 pivots substantially upwards towards the drive shaft 100. The movement of the actuation end 148 drives the second arm 138 substantially upwards towards the drive shaft 100, thereby transitioning the dual-catch member 128 from the latched position to the unlatched position.

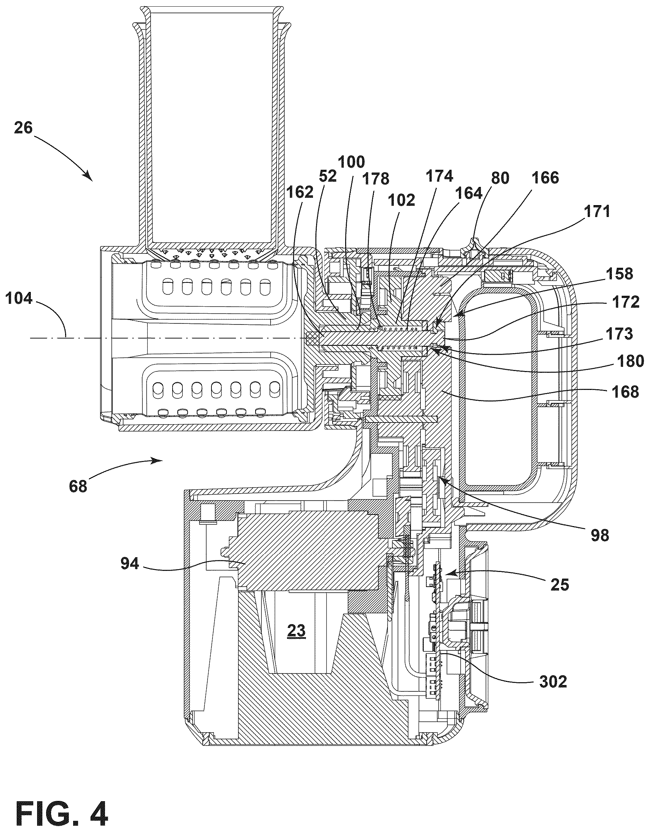

Referring now to FIGS. 4-6, the blade interlock mechanism 158 may be positioned within a hollow interior of the drive shaft 100 and the housing interior 23. The blade interlock mechanism 158 provides a safety mechanism, that can inhibit the operation of the drive assembly 24 until the blade interlock mechanism 158 has been transitioned to an activation state. The blade interlock mechanism 158 includes an interlock shaft 162, an interlock spring 164, a first conductive member 166, and a second conductive member 168.

The interlock shaft 162 is coaxially disposed within the hollow interior defined by the drive shaft 100 such that the interlock shaft 162 extends from the housing interior 23 into the operative space 68. Specifically, an outer end 170 of the interlock shaft 162 is positioned adjacent to the cladding 122 and an inner end 172 is positioned within the housing interior 23. Further, as shown in the configuration illustrated in FIG. 4, adjacent to the inner end 172, the interlock shaft 162 can form an annular recess 171 that reduces a circumference of the interlock shaft 162 at the portion of the interlock shaft 162 where the annular recess 171 is formed.

The interlock shaft 162 can extend through an interlock housing 174 formed by the terminal gear 102. Alternatively, the interlock housing 174 can be an individual component separate from the terminal gear 102 and positioned adjacent to the terminal gear 102.

Within the interlock housing 174, the interlock shaft 162 extends coaxially through the interlock spring 164 that is positioned within the interlock housing 174. The interlock spring 164 is operably attached to the interlock shaft 162 at an interlock collar 178 that annularly extends from a portion of the interlock shaft 162 disposed within the interlock housing 174. As such, the interlock spring 164 can resist the movement of the interlock shaft 162 further into the housing interior 23. The first conductive member 166 extends within the housing interior 23 from the top portion 81 of the housing body 54 longitudinally towards the interlock housing 174. Specifically, the first conductive member 166 is positioned adjacent to an opening 180 of the interlock housing 174, wherein the opening 180 can be formed at a rear side of the interlock housing 174. The second conductive member 168 extends longitudinally from the electronics assembly 25 positioned within the housing interior 23 at the bottom portion 61 towards the interlock housing 174, such that the second conductive member 168 is positioned adjacent to the opening 180 of the interlock housing 174. Consequently, a connective gap 173 is defined between the first conductive member 166 and the second conductive member 168 adjacent to the opening 180 of the interlock housing 174. Further, the connective gap 173 is formed such that the dimensions of the connective gap 173 substantially conform to the dimensions of the interlock shaft 162.

With continued reference to FIGS. 4-6, the blade interlock mechanism 158 can transition between a deactivation state and the activation state. In the deactivation state, the interlock shaft 162 is withheld from the connective gap 173 formed between the first conductive member 166 and the second conductive member 168. As such, in the deactivated position, an electrical circuit that may be selectively formed via the first conductive member 166 and the second conductive member 168 that provides electricity to the drive assembly 24 is broken via the connective gap 173, and the motor 94 is rendered inoperable. When the interlock shaft 162 is actuated inwards towards the gap against the bias of the interlock spring 164, the interlock shaft 162 will enter into the connective gap 173, interface with both the first conductive member 166 and the second conductive member 168 and complete the circuit. Consequently, the blade interlock mechanism 158 in the activation state will allow for the operation of the motor 94.

Additionally, as shown in FIG. 4, when the inner end 172 of the interlock shaft 162 forms the annular recess 171, in the deactivation state, the interlock shaft 162 may be positioned such that the annular recess 171 is disposed within the connective gap 173. Consequently, as a result of the reduced circumference of the interlock shaft 162 at the annular recess 171, the circuit will remain broken. The blade interlock mechanism 158 will transition to the activation state when the annular recess 171 is translated out of the connective gap 173, and the remaining portion of the interlock shaft 162 is disposed within the connective gap 173, thereby completing the circuit.

Referring again to FIGS. 5 and 6, the cover interlock mechanism 182 is positioned within the attachment cavity 110. The cover interlock mechanism 182 provides a safety mechanism that can render the drive assembly 24 inoperable until the cover interlock mechanism 182 has been transitioned to an activation state. The cover interlock mechanism 182 includes a contact member 184, a contact pivot shaft 186, a contact biasing element, and a third conductive member 190.

The contact pivot shaft 186 laterally extends from the surface 127 of the plate 108, such that the contact member 184 may pivot about the contact pivot shaft 186. The contact member 184 is pivotably coupled with the contact pivot shaft 186 via a contact base 194 of the contact member 184. An operable portion 196 of the contact member 184 outwardly extends from the contact base 194 away from the plate 108 and a striking flange 198 extends from the distal-most end of the operable portion 196 relative to the contact base 194. In some configurations, the contact pivot shaft 186 may additionally form a portion of a circuit between the operation control 80, the battery 91, and the motor 94.

The third conductive member 190 is positioned within the attachment cavity 110 and may form a portion of the circuit between the battery 91 and the motor 94. The third conductive member 190 provides a conductive flange 200 that extends outwards from the third conductive member 190.

An interlock flange 202 extends from the contact member 184. The interlock flange 202 extends outwards from the contact base 194 and away from the operable portion 196 and towards the conductive flange 200.

As shown in the configuration illustrated in FIG. 6, the contact biasing element may be disposed within an interior of the contact base 194 to resist the pivoting of the contact member 184 about the contact pivot shaft 186. Alternatively, the contact biasing element may be coupled to the contact member 184 and engaged with the plate 108 to resist the pivoting of the contact member 184.

The cover interlock mechanism 182 is transitioned from a deactivation state to the activation state via the pivoting of the contact member 184 about the contact pivot shaft 186. Specifically, the striking flange 198 can be contacted, causing the contact member 184 to pivot against the bias provided by the contact biasing element. Consequently, the operable portion 196 moves substantially towards the upper portion 142 of the plate 108, driving the interlock flange 202 into the conductive flange 200 of the third conductive member 190. Once the interlock flange 202 contacts the conductive flange 200, the cover interlock mechanism 182 is placed within the activation state, and the electrical circuit providing power to the drive assembly 24 is completed. Consequently, the cover interlock mechanism 182 in the activation state will not prevent the operation of the motor 94.

Additionally, or alternatively, the cover interlock mechanism 182 may be placed in the activation state when the interlock flange 202 drives the conductive flange 200 into contact with the third conductive member 190. In this configuration, the electrical circuit is completed when the conductive flange 200 is in contact with the third conductive member 190.

In operation, the motor 94 will be rendered inoperable until both the blade interlock mechanism 158 and the cover interlock mechanism 182 are each in the activation state.

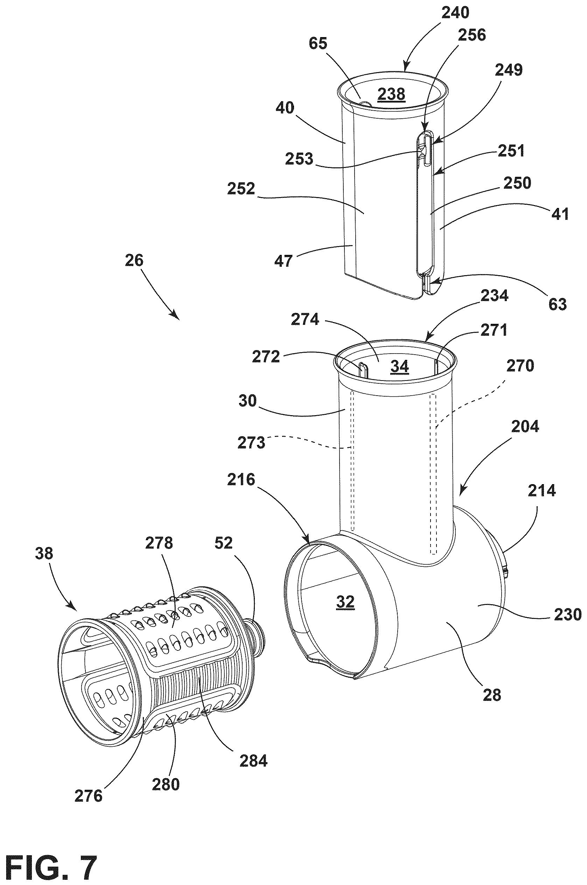

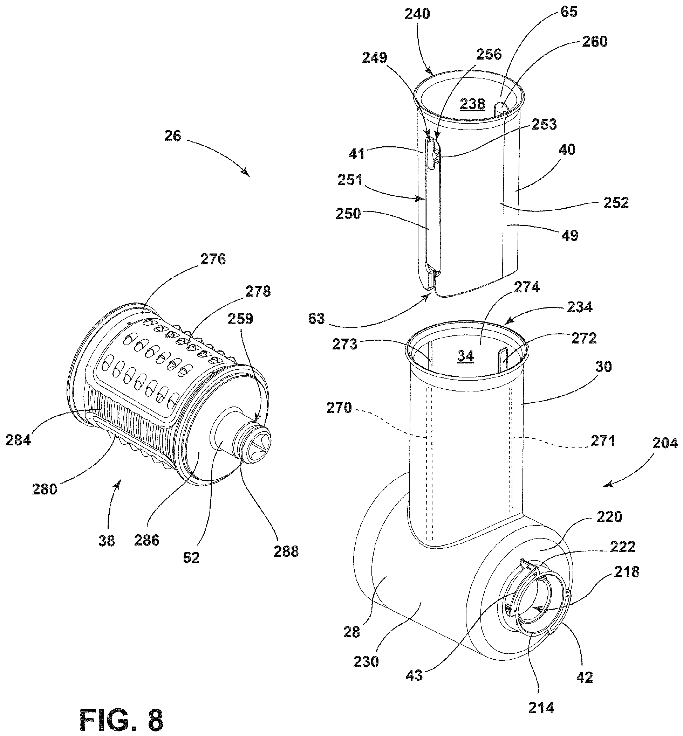

Referring now to FIGS. 7 and 8, the operable assembly 26 may be formed of a cover assembly 204, the pusher 40, and the cylindrical blade 38.

With continued reference to FIGS. 7 and 8, the cover assembly 204 is formed of the lateral cover 28, the longitudinal cover 30, and a cover collar 214. The lateral cover 28 may form a substantially cylindrical body defining the lateral interior 32 therein. The lateral cover 28 defines a front opening 216 that allows passage into the lateral interior 32. Additionally, the lateral cover 28 defines a rear opening 218 at a rear wall 220 of the lateral cover 28 that allows passage into the lateral interior 32, wherein the rear opening 218 is formed on an opposite end of the lateral cover 28 relative to the front opening 216. The rear opening 218 may have a substantially annular shape and is circumscribed by the cover collar 214. The cover collar 214 outwardly extends from the rear wall 220 and provides an exterior surface 222. The first attachment feature 42 and the second attachment feature 43 are positioned on the exterior surface 222 of the cover collar 214 to facilitate coupling of the cover assembly 204 with the motor housing 22. Additionally, the lateral cover 28 may form an access opening at a portion of an exterior surface 230 of the lateral cover 28 that is interposed between the front opening 216 and the rear opening 218.

With continued reference to FIGS. 7 and 8, the longitudinal cover 30 forms a substantially tubular body that defines the longitudinal interior 34 therein. The longitudinal cover 30 defines a top opening 234 that allows passage into the longitudinal interior 34. Additionally, the longitudinal cover 30 defines a bottom opening that allows for passage into the longitudinal interior 34, wherein the bottom opening is formed on an opposite end of the longitudinal cover 30 relative to the top opening 234. The longitudinal cover 30 is attached to the lateral cover 28 via the interfacing of the access opening of the lateral cover 28 with the bottom opening of the longitudinal cover 30. Accordingly, the access opening and the bottom opening cooperate to define a passage between the lateral interior 32 of the lateral cover 28 and the longitudinal interior 34 of the longitudinal cover 30.

Additionally, the longitudinal cover 30 may extend substantially perpendicular to the lateral cover 28. As such, food items introduced to the longitudinal cover 30 via the top opening 234 will fall under the force of gravity towards the lateral cover 28. Further, as shown in the configuration illustrated in FIGS. 7 and 8, the lateral cover 28 and the longitudinal cover 30 may be integrally formed, such that the cover assembly 204 provides a single unitary body.

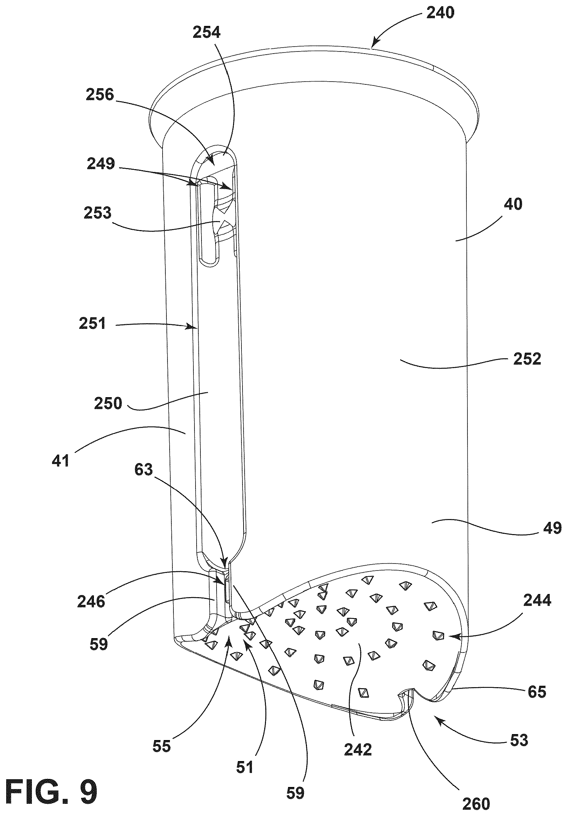

Referring now to FIGS. 7-9, the pusher 40 forms a substantially tubular body defining a pusher interior 238. The pusher 40 forms a pusher opening 240 allowing for passage into the pusher interior 238. A contact surface 242 is formed by the pusher 40 at an opposite end of the pusher 40 relative to the pusher opening 240. The contact surface 242 provides a plurality of contact protrusions 244. As shown in the configuration of the pusher 40 illustrated in FIG. 9, the plurality of contact protrusions 244 may be in the form of a plurality of spikes that extend downwards from the contact surface 242. Alternatively, or additionally, the plurality of contact protrusions 244 may be in the form of a plurality of honed ridges that extend along the contact surface 242.

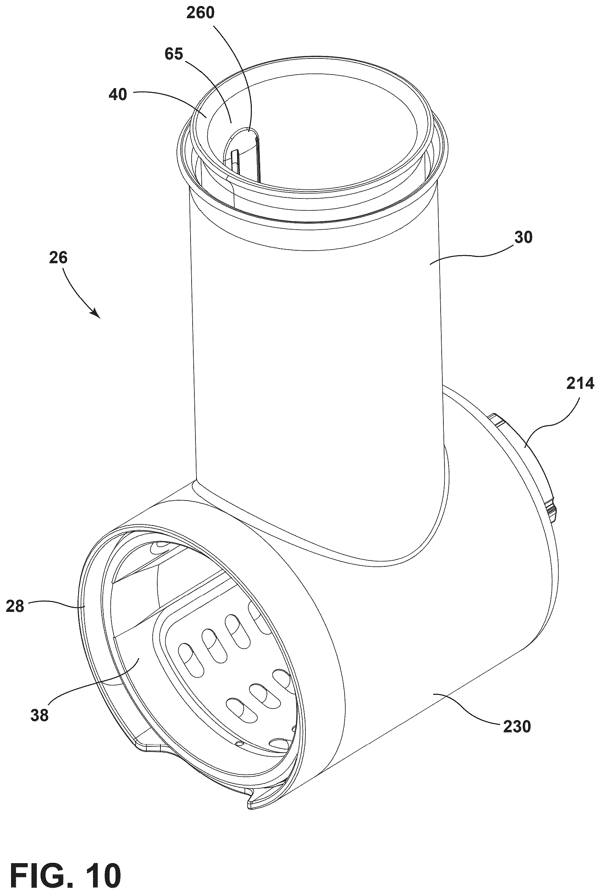

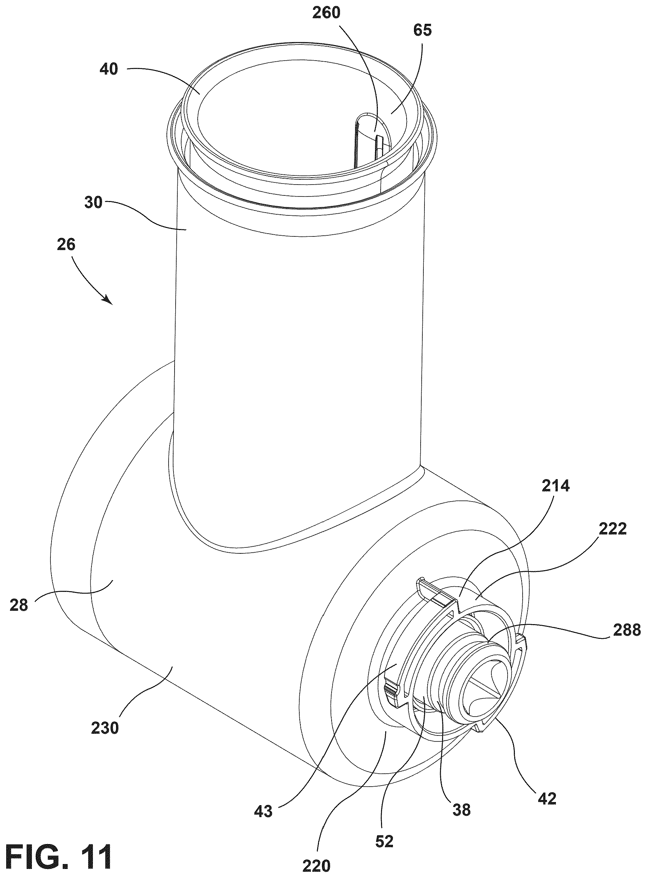

The contact surface 242 may also form a curvature that is configured to align with a curvature of the cylindrical blade 38. As such, the pusher 40 is formed of a first major wall 41, a second major wall 65 that is disposed opposite to the first major wall 41, a first minor wall 47, and a second minor wall 49 that form opposite sides of the pusher 40 and that each interconnect the first major wall 41 and the second major wall 65. As a consequence of the curvature of the contact surface 242, the first major wall 41 and the second major wall 65 have a greater height than both the first minor wall 47 and the second minor wall 49. Additionally, as a result of the curvature of the contact surface 242, both the first major wall 41 and the second major wall 65 form a point 51, 53, respectively. The points 51, 53 of the first and second major walls 41, 65 are the portion of the first and second major walls 41, 65 positioned farthest from the pusher opening 240. Additionally, the points 51, 53 of the first and second major walls 41, 65 may be formed along a centerline of the pusher 40. In operation, the points 51, 53 may assist in ensuring that food items remain positioned between the cylindrical blade 38 and the pusher 40, such that substantially all of the food items introduced into the longitudinal cover 30 are pressed against the cylindrical blade 38. As shown in FIGS. 10 and 11, the pusher 40 is configured to be selectively received by the longitudinal interior 34 of the longitudinal cover 30.

As shown in FIG. 9, a first channel 250 is formed within an exterior surface 252 of the pusher 40. In the configuration of the pusher 40 illustrated in FIG. 9, the first channel 250 is positioned at the first major wall 41 of the pusher 40. The first channel 250 extends along a portion of a height of the pusher 40, forming a protrusion that extends into the pusher interior 238, and thereby defining a channel space 251. The first channel 250 may extend substantially parallel to the vertical extension of the pusher 40. Further, the first channel 250 may extend to the point 51 of the first major wall 41 and form a channel opening 55 therethrough to allow for passage into the channel space 251. As such, the channel opening 55 may be formed at the portion of the first major wall 41 that is most distal to the pusher opening 240.

As shown in FIG. 9, a first pair of barrier protrusions 59 are positioned within the channel space 251 and laterally spaced apart to define a barrier gap 63 that is communication with the channel opening 55. As shown in FIG. 9, the width of the barrier gap 63 is less than the width of the channel space 251. As such, when the pusher 40 is initially received within the longitudinal cover 30, such as during a shredding operation of the cordless kitchen appliance 20, a first major rib 270 of the longitudinal cover 30, shown in FIG. 7, enters through the channel opening 55, through the barrier gap 63, and into the channel space 251. The barrier gap 63 is dimensioned to be slightly larger than the width of the first major rib 270, such that the first major rib 270 is disposed between and interfaced with both of the first pair of barrier protrusions 59. Accordingly, vertical movement of the pusher 40 into and out of the longitudinal cover 30 is permitted, but lateral movement of the pusher 40, relative to the longitudinal cover 30, is substantially inhibited, as the first pair of barrier protrusions 59 engage the first major rib 270 to prevent such lateral movement. As shown in the configuration of the pusher 40 illustrated in FIG. 9, the first pair of barrier protrusions 59 may be integrally formed with the first major wall 41.

With continued reference to FIG. 9, at a top end 254 of the first channel 250, a pair of apertures 249 formed by the pusher 40 are positioned within the channel space 251 and a transverse protrusion 253 extends into the channel space 251 from between the pair of apertures 249, as shown in FIGS. 7-8, to selectively retain the pusher 40 within a fully inserted position with respect to the longitudinal cover 30. In alternative configurations, a pair of laterally spaced apart and elastic flanges are positioned within the channel space 251 to selectively retain the pusher 40 within the fully inserted position with respect to the longitudinal cover 30.

As shown in FIGS. 9 and 10, a second channel 260 is formed by the pusher 40 and is positioned on the second major wall 65. The second channel 260 is substantially identical in form, composition, and function as the first channel 250 described above with reference to FIG. 9. Also, a pair of apertures and a corresponding transverse protrusion that are substantially identical in form, structure, and function as the pair of apertures 249 and the transverse protrusion 253, respectively, may be provided at a top end of the second channel 260. Additionally, a second pair of barrier protrusions are positioned within the second channel and are substantially identical in form, composition, and function as the first pair of barrier protrusions 59 described above. As such, the above-description of the first channel 250, the pair of apertures 249, the transverse protrusion 253 and the first pair of barrier protrusions 59 is applicable to the second channel 260, the pair of apertures and the traverse protrusion provided within the second channel 260; and the second pair of barrier protrusions, respectively, unless otherwise specified.

Additionally, a first drain aperture 246 is formed by the pusher 40 and positioned adjacent to the contact surface 242, wherein the first drain aperture 246 defines a passage to the pusher interior 238. Further, a second drain aperture is formed adjacent to the contact surface 242, wherein the second drain aperture defines a passage to the pusher interior 238. Both the first drain aperture 246 and the second drain aperture facilitate a flow of water out of the pusher interior 238 that may otherwise accumulate within the pusher interior 238 when the pusher 40 is washed. Additionally, as shown in FIG. 9, the first drain aperture 246 may be positioned between the first pair of barrier protrusions 59 and within the barrier gap 63 of the first channel 250 and the second drain aperture may be positioned within the barrier gap of the second channel 260.

With reference back to FIG. 7, a first major rib 270, a second major rib 272, a first minor rib 271, and a second minor rib 273 longitudinally extend along a height of the longitudinal cover 30 and outwardly extend from an interior surface 274 of the longitudinal cover 30 into the longitudinal interior 34. The first major rib 270, the second major rib 272, the first minor rib 271, and the second minor rib 273 may also be annularly spaced apart at equal intervals about the interior surface 274 of the longitudinal cover 30. Further, the first and second major ribs 270, 272 are positioned on opposite sides of the interior surface 274 and the first and second minor ribs 271, 273 are positioned on opposite sides of the interior surface 274 of the longitudinal cover 30. As such, the major ribs 270, 272 and the minor ribs 271, 273 are annularly interspersed about the interior surface 274.

The major ribs 270, 272 may be received, respectively, within the first and second channels 250, 260 of the pusher 40 to properly align the pusher 40 with the longitudinal cover 30, thereby facilitating the selective attachment of the pusher 40 with the longitudinal cover 30. Further, as described above, the major ribs 270, 272 may be interfaced with the first pair of barrier protrusions 59 and the second pair of barrier protrusions, respectively, to substantially inhibit lateral movement of the pusher 40 relative to the longitudinal cover 30. Additionally, when the cordless kitchen appliance 20 is no longer in use, the user may store the pusher 40 within the longitudinal cover 30, as previously described herein, such that the pusher 40 is held within the longitudinal cover 30.

Additionally, as a result of the placement of the first and second channels 250, 260 on opposite sides of the pusher 40, the pusher 40 may be selectively received within the longitudinal cover 30 in at least two different orientations. Further, the pusher 40 may form additional channels similar to the first and second channels 250, 260 detailed above, such that the pusher 40 may be selectively received within the longitudinal cover 30 in more than two orientations.

With continued reference to FIGS. 7-8, the first minor rib 271 and the second minor rib 273 interface with the exterior surface 252 of the pusher 40 when the pusher 40 is selectively disposed within the longitudinal cover 30. The first and second minor ribs 271, 273 function to further stabilize the pusher 40 when the pusher 40 is selectively received within the longitudinal cover 30 and to space apart the pusher 40 from the interior surface 274 of the longitudinal cover 30. The provision of the major ribs 270, 272 and the minor ribs 271, 273 functions to reduce the amount of surface wear, specifically, scratching, that may be produced upon the interior surface 274 of the longitudinal cover 30 during the repetitive translation of the pusher 40 within the longitudinal cover 30 during use of the cordless kitchen appliance 20. By both substantially inhibiting the lateral movement of the pusher 40 by interfacing the major ribs 270, 272 with the first pair of barrier protrusions 59 and the second pair of barrier protrusions, respectively, and interfacing the exterior surface 252 of the pusher 40 with the minor ribs 271, 273, the interior surface 274 may be protected during use of the cordless kitchen appliance 20. Consequently, the overall aesthetic appearance of the longitudinal cover 30 may be maintained, including throughout repeated use of the cordless kitchen appliance 20.

With reference now to FIGS. 7 and 8, the cylindrical blade 38 is formed of a cylinder 276, a first blade sheet 278, a second blade sheet 280, and the blade shaft 52. The cylinder 276 generally forms the structural body of the cylindrical blade 38 and may be formed via an over-molding process, such that the first blade sheet 278 and the second blade sheet 280 are substantially flush with the cylinder 276 to provide the cylindrical blade 38 with a substantially seamless exterior surface 284. Further, the cylinder 276 and both the first and second blade sheets 278, 280 each form a substantially similar curvature, such that together, the cylinder 276 and the first and second blade sheets 278, 280 function to provide the cylindrical blade 38 with a substantially cylindrical form. Additionally, the first and second blade sheets 278, 280 form a substantial majority of the exterior surface 284 of the cylindrical blade 38. Consequently, the cylindrical blade 38 is optimized such that a substantial majority of the exterior surface 284 of the cylindrical blade 38 forms a processing surface, capable of processing, particularly cutting, slicing, and/or grating food items pressed into contact with the cylindrical blade 38.

With continued reference to FIGS. 7 and 8, the blade shaft 52 laterally extends outwards from a rear surface 286 of the cylindrical blade 38. The blade shaft 52 provides a latch collar 288 that forms an annular recess 259 circumscribing a circumference of the blade shaft 52 and extending inwards towards a centerline of the blade shaft 52. The blade shaft 52 is configured to facilitate the selective attachment of the cylindrical blade 38 to the motor housing 22.

Referring now to FIGS. 10 and 11, the pusher 40 may be selectively disposed within the longitudinal cover 30 and the cylindrical blade 38 may be selectively disposed within the lateral cover 28. Consequently, the contact surface 242 of the pusher 40 may interface with the exterior surface 284 of the cylindrical blade 38 via the access opening of the lateral cover 28 and the bottom opening of the longitudinal cover 30. Additionally, the curvature of the contact surface 242 allows for the contact surface 242 to be aligned and substantially flush with the exterior surface 284 of the cylindrical blade 38.

With reference to FIG. 11, the blade shaft 52 extends through the rear opening 218 of the lateral cover 28 to facilitate the selective attachment of the cylindrical blade 38 to the motor housing 22 and the engagement of the cylindrical blade 38 to the drive shaft 100.

With reference now to FIGS. 1, 5, and 10-11, the operable assembly 26 may be selectively attached to the motor housing 22 via the interaction between the first and second attachment features 42, 43 of the lateral cover 28 and the first and second locking features 44, 45 of the attachment portion 58. The operable assembly 26 may be selectively coupled with the drive assembly 24 via the interaction between the latch collar 288 of the blade shaft 52 and the latch mechanism 126 of the attachment portion 58.

With continued reference to FIGS. 1, 5, and 11, the first and second locking features 44, 45 interface with the first and second attachment features 42, 43, respectively, to selectively attach the operable assembly 26 via the lateral cover 28 to the motor housing 22. Specifically, both the first and second locking features 44, 45 form a substantially arcuate shape and outwardly extend from an inner wall 299 of the inner cover 114 towards the centerline of the inner cover 114. A gap is formed between the first locking feature 44 and the cover surface 118. Further, the first locking feature 44 forms an ingress end 296 and a stop end 298 opposite the ingress end 296. The ingress end 296 is unconnected from the cover surface 118 and the stop end 298 extends into the gap and contacts the cover surface 118. Another gap is likewise formed between the second locking feature 45 and the cover surface 118. Additionally, as shown in FIG. 5, the trigger 150 of the striking end 146 of the lift member 134 extends through a trigger aperture 297 formed within the inner wall 299 of the inner cover 114 and is disposed adjacent to the ingress end 296.

In operation, the user aligns the lateral cover 28 of the operable assembly 26 such that the lateral cover 28 can be rotated to position the first and second attachment features 42, 43 within the gaps formed by the first and second locking features, 44, 45, respectively. As the lateral cover 28 is rotated, the first attachment feature 42 strikes the trigger 150, overcoming the bias provided by the biasing element 132 to pivot the lift member 134 thereby depressing the trigger 150 into the trigger aperture 297. As the first attachment feature 42 rotates past the trigger 150, the biasing element 132 causes the lift member 134 to pivot, returning the trigger 150 through the trigger aperture 297 to be positioned adjacent to the ingress end 296. As such, the first attachment feature 42 is held in place within the gap formed between the cover surface 118 and the first locking feature 44, as the trigger 150 prevents the first attachment feature 42 from exiting the gap via the ingress end 296.

Additionally, when the lateral cover 28 is properly attached with the attachment portion 58, the cover interlock mechanism 182 is transitioned to the activation state. Specifically, the striking flange 198 extends through a flange aperture 119 formed in the cover surface 118 and that is positioned within the gap formed between the second locking feature 45 and the cover surface 118. Accordingly, as the second attachment feature 43 is rotated into the gap defined between the second locking feature 45 and the cover surface 118, the second attachment feature 43 strikes the striking flange 198, causing the contact member 184 to pivot against the bias provided by the contact biasing element. Consequently, the interlock flange 202 may be driven into the conductive flange 200 and the cover interlock mechanism 182 can be transitioned to the activation state. Additionally, when the second attachment feature 43 strikes the striking flange 198, the conductive flange 200 may be driven to contact the third conductive member 190, thereby transitioning the cover interlock mechanism 182 to the activation state.

With reference now to FIGS. 1, 5, 6, and 11, the operable assembly 26 may be selectively coupled to the drive assembly 24 via interfacing the cylindrical blade 38 with the drive shaft 100 and the latch mechanism 126. As shown best in FIG. 4, the drive shaft 100 is received into a hollow interior formed by the blade shaft 52 such that the drive shaft 100 can rotate the cylindrical blade 38 about the drive shaft axis 104. Further, the latch collar 288 is interfaced with a capture flange 300 formed at the distal-most portion of the first arm 136 when the latch mechanism 126 is in the latched position.

In operation, the user aligns the blade shaft 52 with the drive shaft 100 and positions the blade shaft 52 over the drive shaft 100. As the blade shaft 52 traverses the drive shaft 100, the blade shaft 52 contacts the capture flange 300, causing the dual-catch member 128 to pivot against the bias provided by the biasing element 132, moving the first arm 136 and the capture flange 300 away from the drive shaft 100. Once the capture flange 300 is aligned with the annular recess 259, the capture flange 300 is forced by the biasing element 132 into the annular recess 259, thereby securing the cylindrical blade 38 to the drive assembly 24 and the motor housing 22.

Additionally, when the cylindrical blade 38 is properly attached to the drive assembly 24 and the motor housing 22, the blade interlock mechanism 158 is transitioned to the activation state. Specifically, as the drive shaft 100 is received by the blade shaft 52, the interlock shaft 162 is actuated via the blade shaft 52 into the connective gap 173 against the bias provided by the interlock spring 164. Accordingly, the blade interlock mechanism 158 is transitioned to the activation state once the interlock shaft 162 is actuated via the blade shaft 52 into the connective gap 173.

With reference now to FIGS. 1, 5, and 6, the operable assembly 26 may be removed by the user through rotating the lateral cover 28 such that the attachment features 42, 43 are removed from the gaps defined between the respective locking features 44, 45 and the cover surface 118. Further, as the first attachment feature 42 is translated from the first locking feature 44, the first attachment feature 42 strikes the trigger 150. Consequently, the lift member 134 pivots about the lift pivot shaft 154, raising the actuation end 148 and the second arm 138 against the bias provided by the biasing element 132. Accordingly, the first arm 136 is raised away from the drive shaft 100, releasing the cylindrical blade 38 from the attachment portion 58 as the dual-catch member 128 is transitioned from the latched position to the unlatched position. Further, as the second arm 138 is driven towards the drive shaft 100 by the actuation end 148, the distal-most portion of the second arm 138 strikes the blade shaft 52, urging the blade shaft 52 to translate away from the drive shaft 100.

With continued reference to FIGS. 1, 5, and 6, the cylindrical blade 38 can be removed from the attachment portion 58 while the cover assembly 204 remains attached to the attachment portion 58. Specifically, the user may interact with the actuation member 84 to transition the dual-catch member 128 from the latched position to the unlatched position, releasing the cylindrical blade 38 from the attachment portion 58.

Additionally, when the cylindrical blade 38 is attached with the attachment portion 58, the interlock spring 164 is substantially compressed and therefore exerts a force via the interlock shaft 162 onto the blade shaft 52 that tends to drive the blade shaft 52 away from the drive shaft 100. As such, when the dual-catch member 128 is in the unlatched position, the interlock spring 164 expands, driving the blade shaft 52 via the interlock shaft 162 away from the drive shaft 100.

The user may remove the entire operable assembly 26 from the motor housing 22 or, alternatively, may remove the cylindrical blade 38 while leaving the cover assembly 204 attached to the motor housing 22.

With reference back to FIG. 4, the electronics assembly 25 includes a printed circuit board 302 and a microcontroller that may be integrated with the printed circuit board 302. The printed circuit board 302 is positioned within the housing interior 23 adjacent to the reception aperture 92. The microcontroller may be configured to execute via a processor of the microcontroller a variety of routines related to the operation of the cordless kitchen appliance 20 that are stored within a memory of the microcontroller. The microcontroller may be in electrical communication with the operation control 80, the motor 94, the blade interlock mechanism 158, and the cover interlock mechanism 182. The microcontroller is capable of maintaining the motor 94 in a deactivated state when the operation control 80 is in the on-position. Specifically, if the microcontroller determines that the operation control 80 is in the on-position and the blade interlock mechanism 158 and/or the cover interlock mechanism 182 are in the deactivated position, the microcontroller will maintain the motor 94 in the deactivated state when both of the interlock mechanisms 158, 182 are subsequently within the activation state. In this instance, the microcontroller will maintain the motor 94 within the deactivated state, despite the operation control 80 being in the on-position and both interlock mechanisms 158, 182 being in the activation state, until the user switches the operation control 80 from the on-position to the off-position, and then from the off-position to the on-position. In other words, under the conditions described above, the microcontroller will prevent the activation of the motor 94 until the user resets the motor 94 via the operation control 80. This functionality provides an additional safety feature, preventing unwanted activations of the motor 94.

Additionally, a motor speed of the motor 94 may be optimized as a function of the various dimensions of the components of the cordless kitchen appliance 20 to facilitate the proper ejection of sliced, or otherwise processed, food products from the cordless kitchen appliance 20. As such, the various components of the cordless kitchen appliance 20, along with the optimized motor speed of the motor 94, can function in combination to eject food items processed by the cordless kitchen appliance 20 a sufficient distance from the cordless kitchen appliance 20. Accordingly, the occurrence of processed food items contacting the exterior of the cordless kitchen appliance 20 may be reduced.

Use of the cordless kitchen appliance 20 of the present disclosure may provide for a variety of advantages, including, but not limited to the following. The portable nature of the cordless kitchen appliance 20 allows the user to move the cordless kitchen appliance 20 about the user's kitchen, and even to locations such as the dining room to provide freshly sliced, grated, and/or shredded food items. Further, the dimensions and weight distribution that function to position the center of gravity of the cordless kitchen appliance 20 in the bottom-rear portion of the cordless kitchen appliance 20 function to maintain the cordless kitchen appliance 20 in an upright position. As such, the cordless kitchen appliance 20 may remain substantially stable, even upon application of a downward force that may be exerted against the cordless kitchen appliance 20 via the cylindrical blade 38 when a user presses a food item against the cylindrical blade 38. Additionally, this stability allows for the height and length of the operable assembly 26 to accommodate a wide variety of vessels. Additionally, the safety features of the cordless kitchen appliance 20 function to further safeguard the user. Specifically, the interlock mechanisms 158, 182 may inhibit the activation of the cordless kitchen appliance 20 unless the operable assembly 26 has been properly aligned with and fitted to the motor housing 22. Additionally, the safety routine that may be provided by the microcontroller functions to further reduce accidental activations of the motor 94. Also, the release mechanisms provided by the cordless kitchen appliance 20 provide flexibility to the user, allowing the user to simply remove the entire operable assembly 26 from the motor housing 22 or remove only the cylindrical blade 38. Additionally, the various convenience features provided by the cordless kitchen appliance 20 facilitate ease of use, allowing for convenient storage of the pusher 40 within the longitudinal cover 30 and reducing the effort required to wash the pusher 40.

The invention disclosed herein is further summarized in the following paragraphs and is further characterized by combinations of any and all of the various aspects described therein

According to one aspect of the present disclosure, a cordless kitchen appliance includes a motor housing that defines a housing interior, a drive assembly disposed within the motor housing, a battery selectively coupled with the motor housing to power the drive assembly, and an operable assembly selectively coupled with the motor housing. The operable assembly includes a lateral cover that defines a lateral interior, a longitudinal cover that defines a longitudinal interior, wherein the longitudinal cover is coupled with the lateral cover such that the lateral interior of the lateral cover and the longitudinal interior of the longitudinal cover are in fluid communication, and a cylindrical blade selectively disposed within the lateral interior of the lateral cover, wherein the operable assembly is selectively coupled with the motor housing via the lateral cover and selectively engaged with the drive assembly via the cylindrical blade. The cordless kitchen appliance further includes a blade interlock mechanism coupled with the motor housing and configured to be transitioned to an activation state by the cylindrical blade and a cover interlock mechanism coupled with the motor housing and configured to be transitioned to an activation state by the operable assembly, and wherein when both the blade interlock mechanism and the cover interlock mechanism are in the activation state, the drive assembly is able to rotate the cylindrical blade.

According to another aspect of the present disclosure, the drive assembly includes a drive shaft, wherein the drive shaft is disposed within a hollow interior formed by a blade shaft of the cylindrical blade when the cylindrical blade is selectively engaged with the drive assembly.

According to another aspect of the present disclosure, the blade interlock mechanism includes an interlock housing disposed within the motor housing, an interlock spring positioned within the interlock housing, an interlock shaft coupled with the interlock spring, wherein the interlock shaft extends through the interlock housing and into a hollow interior formed by the drive shaft, a first conductive member disposed within the motor housing, wherein the first conductive member partially defines an electrical circuit extending between the battery and the drive assembly, and a second conductive member disposed within the motor housing, wherein the second conductive member partially forms an electrical circuit between the battery and the drive assembly, and wherein the first conductive member and the second conductive member define a connective gap positioned adjacent to an opening of the interlock housing.

According to another aspect of the present disclosure, when the cylindrical blade is engaged with the drive assembly, the interlock shaft is driven into the connective gap against a bias of the interlock spring by the blade shaft to complete the circuit partially formed by the both the first conductive member and the second conductive member, thereby placing the blade interlock mechanism into the activation state.

According to another aspect of the present disclosure, the interlock shaft forms an annular recess that reduces a circumference of the portion of the interlock shaft that forms the annular recess, wherein when the blade interlock mechanism is in the activation state, the annular recess is displaced from the connective gap.

According to another aspect of the present disclosure, the interlock shaft forms an interlock collar that annularly extends from a portion of the interlock shaft that is positioned within the interlock housing, wherein the interlock spring is operably coupled with the interlock shaft via the interlock collar.

According to another aspect of the present disclosure, the motor housing includes a housing body coupled to a base member at a bottom portion of the housing body, wherein the base member is configured to support the cordless kitchen appliance upon a surface, an arcuate wall coupled to the housing body, wherein the arcuate wall has a longitudinal surface and a lateral surface, wherein a wall opening is formed by the longitudinal surface, and an attachment portion coupled with the longitudinal surface, wherein the attachment portion laterally extends substantially perpendicular to the longitudinal surface and covers the wall opening.

According to another aspect of the present disclosure, the attachment portion includes an inner cover positioned within and circumscribed by an attachment ring that extends from the longitudinal surface and that circumscribes the wall opening, wherein the inner cover is laterally spaced apart from a plate of the drive assembly to define an attachment cavity therebetween, wherein a drive shaft of the drive assembly extends through a cover aperture of the inner cover.

According to another aspect of the present disclosure, the cover interlock mechanism is positioned within the attachment cavity.

According to another aspect of the present disclosure, the cover interlock mechanism includes a contact member pivotably coupled to the plate via a contact pivot shaft that laterally extends from the plate, a contact biasing element that resists the pivotal movement of the contact member about the contract pivot shaft, and a third conductive member coupled to the plate, wherein when the operable assembly is selectively coupled to the motor housing, the contact member is pivoted against the bias of the contact biasing element to place the cover interlock mechanism into the activation state.

According to another aspect of the present disclosure, the cover interlock mechanism further includes a striking flange that extends from the contact member, wherein the striking flange extends through a flange aperture formed by the inner cover and is disposed exterior to the attachment cavity.

According to another aspect of the present disclosure, the cordless kitchen appliance further includes a latch mechanism configured to selectively engage the cylindrical blade to the drive shaft, wherein the latch mechanism is operably coupled with the plate and includes a dual-catch member pivotably coupled to the plate by a dual-catch pivot rod that extends from the plate, wherein the dual-catch member includes a first arm that extends from a pivot base of the dual-catch member towards an upper portion of the plate, and a second arm that extends from the pivot base towards a lower portion of the plate. The latch mechanism further includes a biasing element that resists the pivotal movement of the dual-catch member about the dual-catch pivot rod.

According to another aspect of the present disclosure, the first arm is operable to selectively engage a blade shaft of the cylindrical blade to selectively couple the cylindrical blade to the drive shaft.

According to another aspect of the present disclosure, the latch mechanism further includes a lift member coupled with the plate and in contact with the second arm of the dual-catch member, wherein as the lateral cover is detached from the motor housing, the lift member is configured to cause the dual-catch member to pivot about the dual-catch pivot rod such that both the first arm and the second arm move towards the upper portion of the plate.

According to another aspect of the present disclosure, the cordless kitchen appliance is configured to slice a food item.

According to yet another aspect of the present disclosure, a cordless food slicer operable to slice a food item includes a motor housing that defines a housing interior, a drive assembly disposed within the motor housing, a battery selectively coupled with the motor housing to power the drive assembly, and an operable assembly selectively coupled with the motor housing. The operable assembly includes a lateral cover that defines a lateral interior, a longitudinal cover that defines a longitudinal interior, wherein the longitudinal cover is coupled with the lateral cover such that the lateral interior of the lateral cover and the longitudinal interior of the longitudinal cover are in fluid communication, and a cylindrical blade selectively disposed within the lateral interior of the lateral cover, wherein the operable assembly is selectively coupled with the motor housing via the lateral cover and selectively engaged with the drive assembly via the cylindrical blade, thereby enabling the drive assembly to rotate the cylindrical blade to slice a food item.

According to another aspect of the present disclosure, the cordless food slicer further includes a pusher configured to be selectively disposed within the longitudinal interior of the longitudinal cover, wherein the pusher forms a pair of barrier protrusions positioned within a channel space defined by a channel that is formed on an exterior surface of the pusher.

According to another aspect of the present disclosure, when the pusher is selectively disposed within the longitudinal interior of the longitudinal cover, a major rib formed by the longitudinal cover that is positioned within the longitudinal interior is received by the channel and a barrier gap formed between the pair of barrier protrusions.

According to yet another aspect of the present disclosure, a cordless kitchen appliance includes a motor housing that defines a housing interior, a drive assembly disposed within the motor housing, a battery selectively coupled with the motor housing to power the drive assembly, and an operable assembly selectively coupled with the motor housing. The operable assembly includes a cover assembly and a cylindrical blade selectively disposed within a hollow interior of the cover assembly, wherein the operable assembly is selectively coupled with the motor housing via the cover assembly and selectively engaged with the drive assembly via the cylindrical blade, thereby enabling the drive assembly to rotate the cylindrical blade to slice a food item.

According to another aspect of the present disclosure, as the operable assembly is removed from the motor housing, the cylindrical blade is ejected from the drive assembly.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes, and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A cordless kitchen appliance (20), comprising:
a motor housing (22) defining a housing interior (23);
a drive assembly (24) disposed within the motor housing (22);
a battery (91) selectively coupled with the motor housing (22) to power the drive assembly (24);
an operable assembly (26) selectively coupled with the motor housing (22), comprising:
a lateral cover (28) that defines a lateral interior (32);
a longitudinal cover (30) that defines a longitudinal interior (34), wherein the longitudinal cover (30) is coupled with the lateral cover (28) such that the lateral interior (32) of the lateral cover (28) and the longitudinal interior (34) of the longitudinal cover (30) are in fluid communication; and
a cylindrical blade (38) selectively disposed within the lateral interior (32) of the lateral cover (28), wherein the operable assembly (26) is selectively coupled with the motor housing (22) via the lateral cover (28) and selectively engaged with the drive assembly (24) via the cylindrical blade (38);
a blade interlock mechanism (158) coupled with the motor housing (22) and transitionable into an activation state by the cylindrical blade (38) being disposed within the lateral interior (32); and
a cover interlock mechanism (182) coupled with the motor housing (22) and transitionable into an activation state by the operable assembly (26), wherein:
when both the blade interlock mechanism (158) and the cover interlock mechanism (182) are in the activation state, the drive assembly (24) is able to rotate the cylindrical blade (38).

2. The cordless kitchen appliance (20) of claim 1, wherein the drive assembly (24) comprises a drive shaft (100), wherein:
the drive shaft (100) is disposed within a hollow interior formed by a blade shaft (52) of the cylindrical blade (38) when the cylindrical blade (38) is selectively engaged with the drive assembly (24).

3. The cordless kitchen appliance (20) of either claim 1 or claim 2, wherein the blade interlock mechanism (158) comprises:
an interlock housing (174) disposed within the motor housing (22);
an interlock spring (164) positioned within the interlock housing (174);
an interlock shaft (162) coupled with the interlock spring (164), wherein the interlock shaft (162) extends through the interlock housing (174) and into a hollow interior formed by the drive shaft (100);
a first conductive member (166) disposed within the motor housing (22), wherein the first conductive member (166) partially defines an electrical circuit extending between the battery (91) and the drive assembly (24); and
a second conductive member (168) disposed within the motor housing (22), wherein the second conductive member (168) partially forms an electrical circuit between the battery (91) and the drive assembly (24), and wherein the first conductive member (166) and the second conductive member (168) define a connective gap (173) positioned adjacent to an opening (180) of the interlock housing (174).

4. The cordless kitchen appliance (20) of claim 3, wherein when the cylindrical blade (38) is engaged with the drive assembly (24), the interlock shaft (162) is driven into the connective gap (173) against a bias of the interlock spring (164) by the blade shaft (52) to complete the circuit partially formed by the both the first conductive member (166) and the second conductive member (168), thereby placing the blade interlock mechanism (158) into the respective activation states.

5. The cordless kitchen appliance (20) of either claim 3 or claim 4, wherein:
the interlock shaft (162) forms an annular recess (171) that reduces a circumference of the portion of the interlock shaft (162) that forms the annular recess (171); and
when the blade interlock mechanism (158) is in the activation state, the annular recess (171) is displaced from the connective gap (173).

6. The cordless kitchen appliance (20) of any one of claims 3 to 5, wherein:
the interlock shaft (162) forms an interlock collar (178) that annularly extends from a portion of the interlock shaft (162) that is positioned within the interlock housing (174); and
the interlock spring (164) is operably coupled with the interlock shaft (162) via the interlock collar (178).

7. The cordless kitchen appliance (20) of either claim 1 or claim 2, wherein the motor housing (22) comprises:
a housing body (54) coupled to a base member (60) at a bottom portion (61) of the housing body (54), wherein the base member (60) is configured to support said cordless kitchen appliance (20) upon a surface;
an arcuate wall (56) coupled to the housing body (54), wherein the arcuate wall (56) has a longitudinal surface (66) and a lateral surface (64), wherein a wall opening (57) is formed by the longitudinal surface (66); and
an attachment portion (58) coupled with the longitudinal surface (66), wherein the attachment portion (58) laterally extends substantially perpendicular to the longitudinal surface (66) and covers the wall opening (57).

8. The cordless kitchen appliance (20) of claim 7, wherein:
the attachment portion (58) comprises an inner cover (114) positioned within and circumscribed by an attachment ring (72) that extends from the longitudinal surface (66) and that circumscribes the wall opening (57);
the inner cover (114) is laterally spaced apart from a plate (108) of the drive assembly (24) to define an attachment cavity (110) therebetween; and
a drive shaft (100) of the drive assembly (24) extends through a cover aperture (120) of the inner cover (114).

9. The cordless kitchen appliance (20) of claim 8, wherein the cover interlock mechanism (182) is positioned within the attachment cavity (110).

10. The cordless kitchen appliance (20) of either claim 8 or claim 9, wherein the cover interlock mechanism (182) comprises:
a contact member (184) pivotably coupled to the plate (108) via a contact pivot shaft (186) that laterally extends from the plate (108);
a contact biasing element that resists the pivotal movement of the contact member (184) about the contract pivot shaft (186); and
a third conductive member (190) coupled to the plate (108), wherein when the operable assembly (26) is selectively coupled to the motor housing (22), the contact member (184) is pivoted against the bias of the contact biasing element to place the cover interlock mechanism (182) into the activation state.

11. The cordless kitchen appliance (20) of claim 10, wherein the cover interlock mechanism (182) further comprises a striking flange (198) that extends from the contact member (184), wherein:
the striking flange (198) extends through a flange aperture (119) formed by the inner cover (114) and is disposed exterior to the attachment cavity (110).

12. The cordless kitchen appliance (20) of any one of claims 8 to 11, further comprising:
a latch mechanism (126) configured to selectively engage the cylindrical blade (38) to the drive shaft (100), wherein the latch mechanism (126) is operably coupled with the plate (108) and comprises:
a dual-catch member (128) pivotably coupled to the plate by a dual-catch pivot rod (130) that extends from the plate (108), wherein the dual-catch member (128) comprises:
a first arm (136) that extends from a pivot base (140) of the dual-catch member (128) towards an upper portion (142) of the plate (108); and
a second arm (138) that extends from the pivot base (140) towards a lower portion (144) of the plate (108); and
a biasing element (132) that resists the pivotal movement of the dual-catch member (128) about the dual-catch pivot rod (130).

13. The cordless kitchen appliance (20) of claim 12, wherein the first arm (136) is operable to selectively engage a blade shaft (52) of the cylindrical blade (38) to selectively couple the cylindrical blade (38) to the drive shaft (100).

14. The cordless kitchen appliance (20) of any one of claims 1-13, further comprising a pusher (40) configured to be selectively disposed within the longitudinal interior (34) of the longitudinal cover (30), wherein:
the pusher (40) forms a pair of barrier protrusions (59) positioned within a channel space (251) defined by a channel (250) that is formed on an exterior surface (252) of the pusher (40).

15. The cordless kitchen appliance (20) of any one of claims 1 to 14, wherein said cordless kitchen appliance (20) is operable to slice a food item received within the longitudinal interior (34) and directed into contact with the cylindrical blade (38) during operation of said cordless kitchen appliance (20).
